# EUROPÄISCHE PATENTSCHRIFT

(11) **EP 1 957 812 B1**
(45) Veröffentlichungstag und Bekanntmachung des Hinweises auf die Patenterteilung: **02.03.2011**
(21) Anmeldenummer: 06828607.9
(22) Anmeldetag: 05.12.2006
(51) Int. Cl.: F16C 33/36, F16C 33/54

(54) **RADIALWÄLZLAGER, INSBESONDERE EINREIHIGES RILLENWÄLZLAGER**
RADIAL ROLLING BEARING, ESPECIALLY SINGLE-ROW DEEP GROOVE ROLLING BEARING
ROULEMENT RADIAL, EN PARTICULIER ROULEMENT RAINURE A UNE RANGEE

(30) Priorität: 10.12.2005 DE 102005059032
(43) Veröffentlichungstag der Anmeldung: 20.08.2008
(73) Patentinhaber: Schaeffler Technologies GmbH & Co. KG, 91074 Herzogenaurach (DE)
(72) Erfinder: HOFMANN, Heinrich, 97422 Schweinfurt (DE); DÖPPLING, Horst, 91074 Herzogenaurach (DE); BOHR, Andreas, 91074 Herzogenaurach (DE); EIDLOTH, Rainer, 91074 Herzogenaurach (DE)
(74) Vertreter: Becker, Bodo
(86) Internationale Anmeldenummer: PCT/DE2006/002155
(87) Internationale Veröffentlichungsnummer: WO 2007/065415

(56) Entgegenhaltungen:
- DE-C- 431 471
- GB-A- 317 407
- JP-A- 2003 148 480
- US-A- 1 438 654
- US-A- 2 068 198

## Beschreibung

### Gebiet der Erfindung

Die Erfindung betrifft ein Radialwälzlager nach den oberbegriffsbildenden Merkmalen des Patentanspruchs 1, und sie ist insbesondere vorteilhaft an einreihigen Rillenwälziagern zur Lagerung der Hauptwelle in Kraftfahrzeug-Schaltgetrieben oder zur Spannrollenlagerung innerhalb des Sekundärtriebs von Verbrennungsmotoren realisierbar.

Ein derartiges Radialwälzlager ist aus der Patentschrift US 1 438 654 bekannt.

### Hintergrund der Erfindung

Dem Fachmann in der Wälzlagertechnik ist es allgemein bekannt, dass einreihige Rillenkugellager starre, nicht zerlegbare Radialwälzlager sind, die sich vor allem dadurch auszeichnen, dass deren radiale und axiale Tragfähigkeit gleichermaßen hoch ist und dass diese wegen ihrer geringen Reibung die höchsten Drehzahlgrenzen aller Lagerarten aufweisen. Diese Rillenkugellager sind seit langem bekannt und bestehen im Wesentlichen aus einem äußeren Lagerring und einem inneren Lagerring sowie aus einer Anzahl zwischen den Lagerringen angeordneter Kugeln als Wälzkörpern, die in jeweils rillenförmigen Kugellaufbahnen in der Innenseite des äußeren Lagerrings und in der Außenseite des inneren Lagerrings durch einen Lagerkäfig in gleichmäßigen Abständen zueinander geführt werden. Das Einbringen der Kugeln in solche Radialkugellager erfolgt dabei durch das mit der DE 168 499 bekannt gewordene Exzentermontageverfahren, bei dem die beiden Lagerringe exzentrisch zueinander angeordnet werden und der dadurch entstehende freie Raum zwischen den Lagerringen mit den Kugeln befüllt wird, die abschließend auf dem Teilkreis der Kugellaufbahnen mit gleichmäßigem Abstand zueinander verteilt werden.

In der Praxis hat es sich jedoch gezeigt, dass derartigen Rillenkugellagern aufgrund der geringen maximal einbaubaren Anzahl von Kugeln, die von den Abmessungen des inneren und des äußeren Lagerrings sowie dem Kugeldurchmesser abhängig ist, in Bezug auf die Tragfähigkeit des Lagers dennoch Grenzen gesetzt sind. In der Vergangenheit wurden daher eine Vielzahl von Lösungen vorgeschlagen, mit denen durch eine Erhöhung der Anzahl der Kugeln eine Erhöhung der Tragfähigkeit von Rillenkugellagern erreicht werden sollte.

Eine solche Möglichkeit, die Anzahl der Wälzkörper an einem Radialwälzlager zu erhöhen, ist beispielsweise durch die DE 43 34 195 A1 bekannt geworden. Bei diesem, an sich als einreihiges Rillenkugellager ausgebildeten Radialwälzlager werden die Wälzkörper jedoch nicht durch Kugeln sondern durch so genannte Kugelscheiben gebildet, die mit zwei symmetrisch von einer Kugelgrundform abgeflachten sowie parallel zueinander angeordneten Seitenflächen ausgebildet sind. Die Breite dieser Kugelscheiben zwischen deren Seitenflächen ist dabei kleiner als der Abstand zwischen der Innenseite des äußeren Lagerrings und Außenseite des inneren Lagerrings ausgebildet, so dass die Kugelscheiben beim Befüllen des Lagers axial zum Lager durch den Abstand zwischen Innenring und Außenring in das Lager eingeführt und dann um 90° in die Laufbahnen der Lagerringe gedreht werden können. Da durch dieses Montageverfahren kleinere Abstände zwischen den einzelnen Wälzkörpern erzielbar sind, kann somit insgesamt eine höhere Anzahl an Wälzkörpern in das Radialwälzlager eingebracht werden. Um jedoch ein gegenseitiges Berühren sowie ein selbsttätiges Verdrehen der Wälzkörper quer zur Laufrichtung im Lagerbetrieb zu vermeiden, werden auch diese Wälzkörper in einem Lagerkäfig in gleichmäßigen Abständen zueinander gehalten sowie axial geführt. Eine der vorgeschlagene Käfigausführungen ist dabei ein aus zwei Ringhälften zusammengefügter Lagerkäfig, bei dem in jede der Ringhälften jeweils der Anzahl der Kugelscheiben entsprechende Vertiefungen eingearbeitet sind, die in komplementäre zentrische Vertiefungen in den Seitenflächen der Kugelscheiben eingreifen. Die Vertiefungen in den Seitenflächen der Kugelscheiben sind dabei durch eine zentrische Durchgangsbohrung miteinander verbunden, durch welche hindurch die beiden Ringhälften durch Niete miteinander verbunden werden, so dass die Kugelscheiben in Umfangsrichtung fest zueinander fixiert sind. Zwischen den Vertiefungen weisen beide Ringhälften des Lagerkäfigs jeweils gerade entlang der Seitenflächen der Kugelscheiben verlaufende Abschnitte auf, durch die im Zusammenwirken mit den als Rollachsen der Kugelscheiben dienenden Nieten auch ein selbsttätiges Verdrehen der Wälzkörper quer zu deren Laufrichtung vermieden wird.

Als nachteilig hat es sich jedoch erwiesen, dass mit einem derart ausgebildeten Lagerkäfig nicht das gesamte, bei unterschiedlichen Lagerbeiastungen auftretende kinematische Verhalten der als Kugelscheiben ausgebildeten Wälzkörper berücksichtigt worden ist, so dass dieser Lagerkäfig für solche speziellen Wälzkörper als ungeeignet erscheint. So wurde beispielsweise festgestellt, dass Kugelscheiben als Wälzkörper in Radialwälzlagern bei öheren Drehzahlen und gleichmäßiger Last aufgrund des eintretenden Kreiseleffektes ohne Schränkbewegungen stabil in ihren Wälzkörperlaufbahnen laufen und keine axiale Führung durch den Lagerkäfig benötigen. Fällt jedoch die Lagerdrehzahl unter eine zulässige Mindestdrehzahl, tritt ein so genannter Taumeleffekt ein, bei dem die Kugelscheiben dazu neigen, in ihren Laufbahnen quer zur Laufrichtung wellenförmig abzurollen. Dabei kommt es zum Kontakt der Laufbahnkanten der Kugelscheiben mit den geraden Abschnitten der beiden Ringhälften des Lagerkäfigs, durch den eine solche Reibungswärme erzeugt wird, dass es zu einem Anstieg der Betriebstemperatur im Radialwälzlager kommt. Die Reibung zwischen den Kugelscheiben und dem Lagerkäfig kann dabei so stark werden, dass die zulässige Betriebstemperatur des Lagers überschritten wird und der erforderliche Schmierfilm zwischen den Kugelscheiben, dem Lagerkäfig und den Lagerringen örtlich abreißt oder der Schmierstoff teilweise verbrennt, so dass es zur Zerstörung des Lagerkäfigs sowie zum vorzeitigen Ausfall des Lagers kommt. Ebenso konnte festgestellt werden, dass bei einem solchen Lagerkäfig ein ähnlicher, ebenfalls zu dessen Zerstörung führender Effekt dadurch eintritt, dass die Kugelscheiben durch ihre zwischen den beiden Ringhälften eingespannte Lagerung auf den Nieten des Lagerkäfigs keine Möglichkeit haben, sich bei gemischter radialer und axialer Belastung des Radialwälziagers nicht auf den jeweiligen Druckwinkel des Radialwälzlagers ausrichten zu können. Bei dem Bestreben der Kugelscheiben, sich unter solchen Belastungen des Radialwälzlagers selbsttätig auf den Druckwinkel des Radialwälzlagers auszurichten kommt es ebenfalls zum Kontakt der Seitenflächen der Kugelscheiben mit den geraden Abschnitten der Ringhälften des Lagerkäfigs sowie zum Kontakt der zentrischen Durchgangsbohrung in den Kugelscheiben mit den Nieten des Lagerkäfigs, so dass es auch unter solchen Bedingungen zum Entstehen von übermäßiger Reibungswärme im Radialwälzlager kam. Schließlich hat sich ein derartiger Lagerkäfig für Kugelscheiben auch im Hinblick auf die Herstellungskosten von mit solchen Lagerkäfigen ausgerüsteten Radialwälzlagem als nachteilig erwiesen, da dessen Fertigung und insbesondere dessen im bestückten Lager zu erfolgende Montage durch Nieten relativ aufwändig ist.

### Aufgabe der Erfindung

Ausgehend von den dargelegten Nachteilen des bekannten Standes der Technik liegt der Erfindung deshalb die Aufgabe zu Grunde, ein Radialwälzlager, insbesondere Rillenwälzlager, zu konzipieren, das mit einem einfach und kostengünstig herstellbaren Lagerkäfig ausgebildet ist, mit dem einerseits eine axiale Führung der als Kugelscheiben ausgebildeten Wälzkörper gewährleistet ist und mit dem andererseits auch bei niedrigen Lagerdrehzahlen und/oder bei gemischter axialer und radialer Lagerbelastung eine Ausrichtung der Kugelscheiben mit den jeweiligen Druckwinkeln ermöglicht und so ein Reibungswärme erzeugender Kontakt zwischen den Kugelscheiben und dem Lagerkäfig vermeidbar ist.

### Beschreibung der Erfindung

Erfindungsgemäß wird diese Aufgabe bei einem Radialwälzlager nach dem Oberbegriff des Anspruchs 1 derat gelöst, dass in die Seitenflächen der Wälzkörper bevorzugt zentrische Vertiefungen eingearbeitet sind, die als zusätzliches Schmierstoffreservoir für das Radialwälzlager vorgesehen sein können. Diese zentrischen Vertiefungen sind bevorzugt in Form kreisrunder flacher Mulden ausgebildet, aus denen der bei der Lagermontage eingefüllte Schmierstoff im Lagerbetrieb selbsttätig durch Fliehkraft in den bevorzugt durch seitliche Dichtungsringe abgedichteten Lagerinnenraum austritt. Gleichzeitig haben diese Vertiefungen den Vorteil, dass dadurch der Massenschwerpunkt der Wälzkörper radial nach außen zu deren Laufflächen hin verlagert wird und sich somit die Laufeigenschaften der Wälzkörper wesentlich verbessern.

Es ist ein weiteres Merkmal des erfindungsgemäß ausgebildeten Radialwälzlagers, dass die zur axialen Führung der Wälzkörper vorgesehenen Linienkontakte zwischen den Seitenflächen der Wälzkörper und den Längsstegen der Käfigtaschen über längsmittig in die Längsstege eingeformte Keilvertiefungen herstellbar sind, die sich über die Breite der Seitenflächen der Wälzkörper erstrecken. Diese Keilvertiefungen weisen im Lagerbetrieb keinen dauerhaften Kontakt zu den Seitenflächen der Wälzkörper auf, stehen jedoch im Führungsfall mit diesen jeweils zweifach in Führungskontakt. Darüber hinaus ist es vorteilhaft, die entstehende Keilkante an den Keilvertiefungen verrundet auszubilden, um einem vorzeitigen Verschleiß dieser Keilkante vorzubeugen.

Zur Realisierung eines axialen Freiheitsgrades der Wälzkörper wird bei dem erfindungsgemäß ausgebildeten Radialwälzlager darüber hinaus noch vorgeschlagen, dass der Teilkreis des Lagerkäfigs kleiner als der Teilkreis des Radialwälzlagers ist und dass die Längsstege der Käfigtaschen eine maximale Höhe von 35 % des Durchmessers der Wälzkörper aufweisen. Durch den gegenüber den Lagerteilkreis kleineren Teilkreis des Lagerkäfigs werden die Wälzkörper somit unterhalb ihrer Längsachsen durch die Käfigtaschen umschlossen, so dass den Wälzkörpern im Zusammenhang mit der geringen Höhe der Längsstege der Käfigtaschen und der vorbeschriebenen Ausbildung der Käfigtaschen ausreichend Bewegungsspielraum zur Verfügung steht, um sich ohne Kontakt zum Lagerkäfig an die jeweils vorliegende Lagerbelastung anpassen können.

Die durch die Seitenflächen der Wälzkörper begrenzte Wälzkörperbreite beträgt dabei vorzugsweise mindestens 70 % des Durchmessers der Kugelgrundform der Wälzkörper, da eine solche Breite sich in der Praxis hinsichtlich der radialen und axialen Tragfähigkeit des Lagers bewährt hat und in etwa der Kontaktfläche entspricht, die auch die Kugeln herkömmliches Rillenkugellager zu ihren Laufbahnen in den Lagerringen aufweisen.

Bevorzugte Ausgestaltungen und vorteilhafte Weiterbildungen des erfindungsgemäß ausgebildeten Radialwälzlagers werden in den Unteransprüchen beschrieben.

Gemäß den Ansprüchen 2 und 3 zeichnet sich das erfindungsgemäß ausgebildete Radialwälzlager bevorzugt dadurch aus, dass die entsprechend den Längs- und Querradien der Laufflächen der Wälzkörper gewölbt ausgebildeten Querstege der Käfigtaschen sich beidseitig derart über diese Laufflächen hinaus erstrecken, dass die zwischen den Querstegen über verrundete Übergangsbereiche mit diesen verbundenen Längsstege der Käfigtaschen in einem Abstand zu den Seitenflächen der Wälzkörper angeordnet sind. Die von den Seitenflächen beabstandete Anordnung der Längsstege der Käfigtaschen hat dabei den Vorteil, dass die Wälzkörper gleichzeitig einen durch die Ober- und Unterseite der Keilvertiefungen in den Längsstegen begrenzten beidseitigen axialen Freiheitsgrad eines Winkels von etwa 12° bis 18° aufweisen, durch den die Wälzkörper bei radialer und axialer Lagerbelastung sich selbsttätig an den Druckwinkel des Radiallagers ausrichten können.

Zur Lösung der Aufgabenstellung tragen schließlich auch noch die Merkmale des erfindungsgemäß ausgebildeten Radiallagers nach den Ansprüchen 4 und 5 bei, nach denen der Lagerkäfig entweder als spanlos herstellbares Stanzzieh-Prägeteil aus einem Metallwerkstoff oder als Spritzgussteil aus einem technischen oder hochtemperaturbeständigen Kunststoff ausgebildet ist oder alternativ aus einem Faserverbundkunststoff aus Gewebeverstärkung und Harzmatrix hergestellt wird. Bei den Metallwerkstoffen haben sich dabei vor allem Stahl, Messing oder Aluminium als geeignet erwiesen, mit denen der Lagerkäfig zusätzlich vollständig oder begrenzt auf dessen Kontaktstellen mit den Wälzkörpern mit Funktionsschichten aus Hartstoff, Chrom-Eisen, Oxid-Keramiken oder Molybdän beschichtet oder mit einem technischen Kunststoff umspritzt werden kann. Als technische Kunststoffe für den Lagerkäfig bieten sich dagegen PA 66 oder PA 46 mit oder ohne Einlagerungen aus Glasfaser an, während als hochtemperaturbeständige Kunststoffe beispielsweise PAEK, PEEK, TPI oder PAI mit geeigneten Additiven oder Einlagerungen aus Glasfaser verwendbar sind. Die genannten Werkstoffe haben sich dabei als besonders kostengünstig in ihrer Anschaffung erwiesen und ermöglichen darüber hinaus den Einsatz kostengünstiger Fertigungsverfahren für den Lagerkäfig, so dass mit derartigen Lagerkäfigen ausgebildete Radiallager insgesamt mit niedrigen Herstellungskosten herstellbar sind.

Das erfindungsgemäß ausgebildete Radialwälzlager weist somit gegenüber den aus dem Stand der Technik bekannten Radialwälzlagern den Vorteil auf, dass es durch die Ausbildung des Lagerkäfigs mit Käfigtaschen, in denen die Wälzkörper lediglich durch zwei zweifache Linienkontakte axial geführt werden, die kinematischen Verhältnisse in einem solchen Radiallager insoweit berücksichtigt, dass es eine axiale Führung für die Wälzkörper aufweist, durch weiche die unterhalb einer zulässigen Mindestdrehzahl auftretenden Taumelbewegungen bzw. quer zur Laufrichtung auftretenden Kippbewegungen der Wälzkörper nicht mehr zu Reibungswärme und zu unzulässiger Erhöhung der Betriebstemperatur des Radialwälzlagers führen. Gleichzeitig weisen die Wälzkörper durch ihre Linienkontaktführung in den Käfigtaschen einen ausreichenden Freiheitsgrad in axialer Richtung auf, durch den diese sich selbsttätig bei radialer und axialer Lagerbelastung an den jeweils vorliegenden Druckwinkel des Radialwälziagers ausrichten können ohne mit dem Lagerkäfig in Kontakt zu kommen. Darüber hinaus hat sich ein solcher Lagerkäfig auch hinsichtlich niedriger Herstellungskosten als vorteilhaft erwiesen, da dieser konstruktiv einfach aufgebaut ist und aus kostengünstigen Werkstoffen sowie mit kostengünstigen Fertigungs- und Montageverfahren herstellbar ist.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Dabei zeigen:
- Figur 1: eine räumliche Sprengdarstellung eines erfindungsgemäß aus- gebildeten Radialwälzlagers;
- Figur 2: eine vergrößerte räumliche Darstellung eines Querschnitts durch ein erfindungsgemäß ausgebildetes Radialwälzlager;
- Figur 3: eine räumliche Einzelteildarstellung des Lagerkäfigs eines erfin- dungsgemäß ausgebildeten Radialwälzlagers;
- Figur 4: eine Einzefteildarstellung einer Käfigtasche des Lagerkäfigs ei- nes erfindungsgemäß ausgebildeten Radialwälzlagers.

### Ausführliche Beschreibung der Zeichnungen

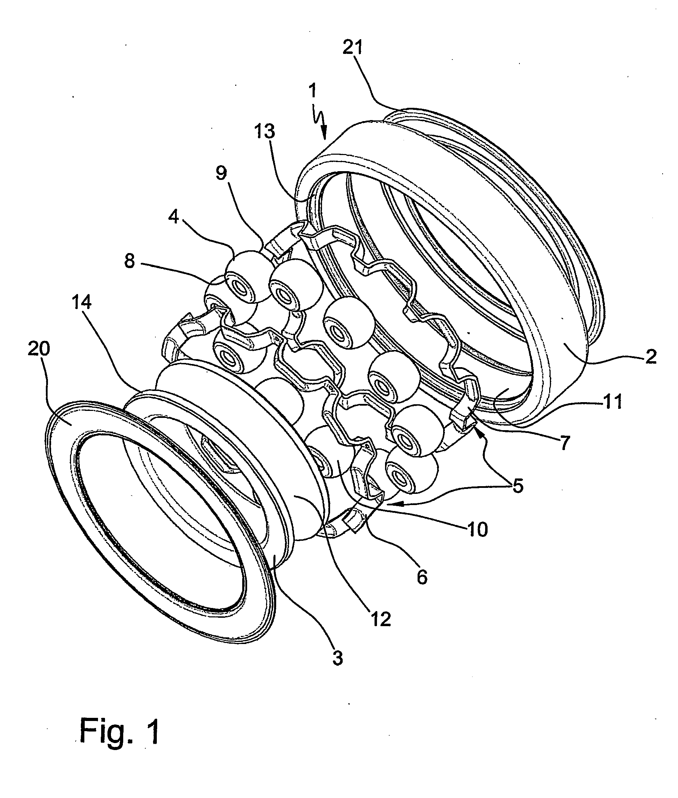

Aus der Sprengdarstellung gemäß Figur 1 geht deutlich ein als einreihiges Rillenwälzlager ausgebildetes Radialwälziager 1 hervor, welches ähnlich wie bekannte Rillenkugellager im Wesentlichen aus einem äußeren Lagerring 2 und einem inneren Lagerring 3 sowie aus einer Vielzahl zwischen diesen Lagerringen 2, 3 angeordneter Wälzkörper 4 besteht. Die Wälzkörper 4 werden dabei deutlich sichtbar durch so genannte Kugelscheiben gebildet, die jeweils zwei symmetrisch von einer Kugelgrundform abgeflachte, parallel zueinander angeordnete Seitenflächen 8, 9 aufweisen und mit ihren Laufflächen 10 in zwei rillenförmigen Laufbahnen 11, 12 abrollen, die jeweils in die Innenseite 13 des äußeren Lagerrings 2 und in die Außenseite 14 des inneren Lagerrings 3 eingearbeitet sind. Darüber hinaus werden die Wälzkörper 4 durch einen aus zwei Ringhälften 6, 7 zusammengefügten Lagerkäfig 5 in Umfangsrichtung in gleichmäßigen Abständen zueinander gehalten, dessen Ausbildung Gegenstand der nachfolgenden Beschreibung ist.

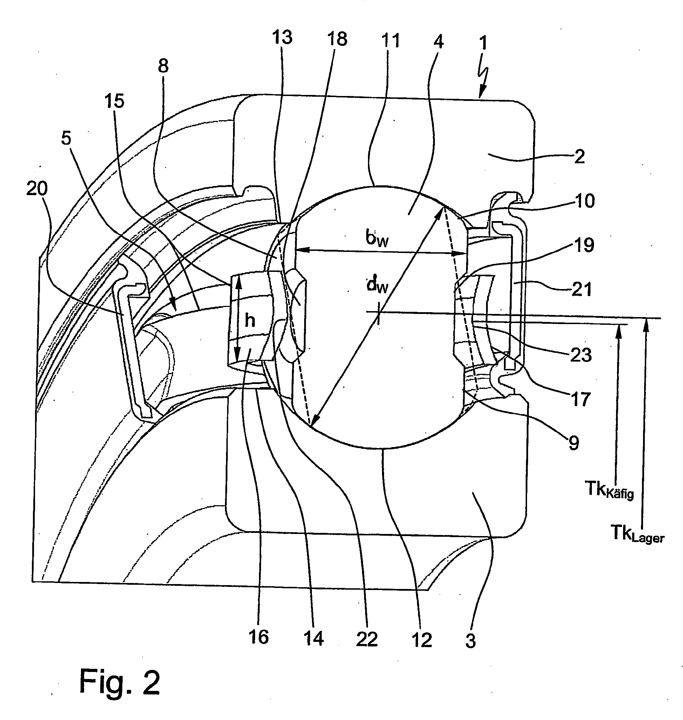

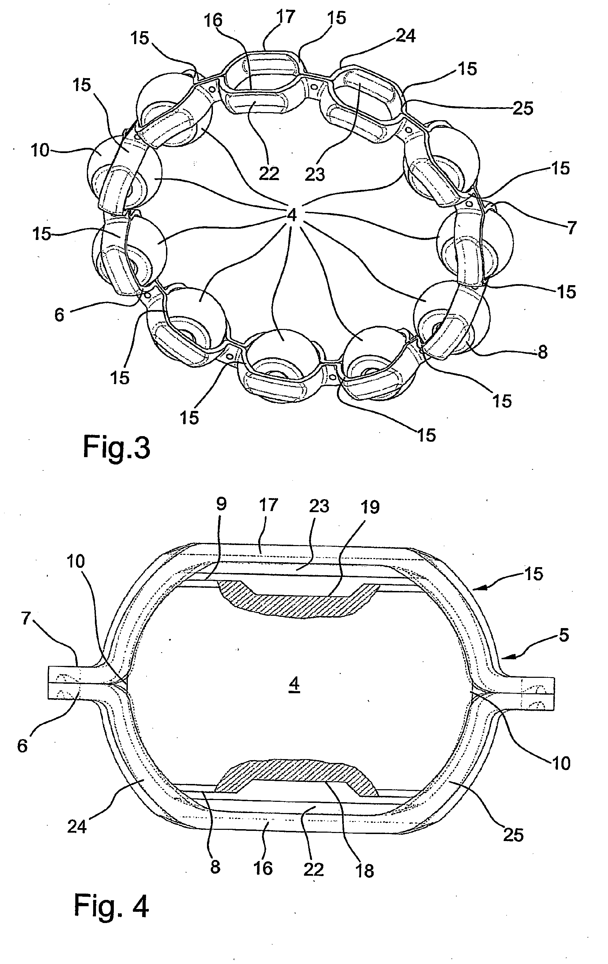

Durch eine Zusammenschau der Figuren 2 und 3 wird deutlicht, dass der Lagerkäfig 5 erfindungsgemäß für jeden Wälzkörper 4 einzelne, dieselben an einer Teilkreislinie umschließende Käfigtaschen 15 aufweist, in denen die Wälzkörper 4 über zumindest zwei reibungsarme Linienkontakte zwischen ihren Seitenflächen 8, 9 und den Längsstegen 16, 17 der Käfigtaschen 15 zwischen den Lagerringen 2, 3 axial geführt werden. In die Seitenflächen 8, 9 der Wälzkörper 4 sind dabei, wie auch aus Figur 4 ersichtlich ist, zentrische Vertiefungen 18, 19 eingearbeitet, die als zusätzliches Schmierstoffreservoir für das Radialwälzlager 1 vorgesehen sind und durch die zugleich der Massenschwerpunkt der Wälzkörper 4 radial nach außen zu deren Laufflächen 10 hin verlagert wird. Diese zentrischen Vertiefungen 18, 19 sind in Form kreisrunder flacher Mulden ausgebildet, aus denen der bei der Lagermontage eingefüllte Schmierstoff im Lagerbetrieb selbsttätig durch Fliehkraft in den durch seitliche Dichtungsringe 20, 21 abgedichteten Lagerinnenraum austritt.

Desweiteren ist in den Figuren 3 und 4 erkennbar, dass die Linienkontakte zwischen den Seitenflächen 8, 9 der Wälzkörper 4 und den Längsstegen 16, 17 der Käfigtaschen 15 über längsmittig in die Längsstege 18, 19 eingeformte und sich über die Breite der Seitenflächen 8, 9 der Wälzkörper 4 erstreckende axial le Keilvertiefungen 22, 23 hergestellt werden, die durch die Vertiefungen 18, 19 in den Seitenflächen 8, 9 der Wälzkörper 4 mit diesen jeweils zweifach in reibungsreduziertem Führungskontakt stehen. Die entsprechend den Längs- und Querradien der Laufflächen 10 der Wälzkörper 4 gewölbt ausgebildeten Querstege 24, 25 der Käfigtaschen 15 erstrecken sich dabei deutlich sichtbar beidseitig derart über diese Laufflächen 10 hinaus, dass die zwischen den Querstegen 24, 25 über verrundete Übergangsbereiche mit diesen verbundenen Längsstege 16, 17 der Käfigtaschen 15 in einem Abstand zu den Seitenflächen 8, 9 der Wälzkörper 4 angeordnet sind. Diese von den Seitenflächen 8, 9 der Wälzkörper 4 beabstandete Anordnung der Längsstege 16, 17 der Käfigtaschen 15 bewirkt dabei, dass die Wälzkörper 4 beidseitig einen durch die Ober- und Unterseiten der Keilvertiefungen 22, 23 in den Längsstegen 16, 17 begrenzten und in Figur 2 durch gestrichelte Linien angedeuteten Freiheitsgrad von etwa 12° bis 18° zum selbsttätigen Ausrichten an den Druckwinkel des Radialwälzlagers 1 bei radialer und axialer Lagerbelastung aufweisen.

Darüber hinaus ist in Figur 2 noch dargestellt, dass als weitere Voraussetzungen für den genannten Freiheitsgrad der Wälzkörper 4 der Teilkreis Tk_{Kätig} des Lagerkäfigs 5 kleiner als der Teilkreis Tk_{Lager} des Radialwälzlagers 1 ist, so dass die Wälzkörper 4 unterhalb ihrer Längsachsen durch die Käfigtaschen 15 des Lagerkäfigs 5 umschlossen werden. Die Längsstege 16, 17 der Käfigtaschen 15 weisen dabei eine maximale Höhe h von 35 % des Durchmessers d_{w} der Wälzkörper 4 auf und die durch die Seitenflächen 8, 9 der Wälzkörper 4 begrenzte Wälzkörperbreite b_{w} beträgt mindestens 70 % des Durchmessers d_{w} der Wälzkörper 4. Lediglich andeutungsweise geht aus den Zeichnungen noch hervor, dass der Lagerkäfig 5 als spanlos hergestelltes Stanzzieh-Prägeteil aus einem Stahlblech ausgebildet ist, dessen Ringhälften 6, 7 durch Induktionsschweißen miteinander verbunden sind und der begrenzt auf dessen Kontaktstellen mit den Wälzkörpern 4 mit einer Funktionsschicht aus Chrom-Eisen zur Verschleißminderung beschichtet ist.

### Bezugszahlenliste

- 1: Radialwälzlager
- 2: äußerer Lagerring
- 3: innerer Lagerring
- 4: Wälzkörper
- 5: Lagerkäfig
- 6: Ringhälfte von 5
- 7: Ringhälfte von 5
- 8: Seitenfläche von 4
- 9: Seitenfläche von 4
- 10: Laufflächen von 4
- 11: Laufbahn von 2
- 12: Laufbahn von 3
- 13: Innenseite von 2
- 14: Außenseite von 3
- 15: Käfigtaschen
- 16: Längssteg von 15
- 17: Längssteg von 15
- 18: Vertiefung in 8
- 19: Vertiefung in 9
- 20: Dichtungsring
- 21: Dichtungsring
- 22: Keilvertiefung in 16
- 23: Keilvertiefung in 17
- 24: Quersteg von 15
- 25: Quersteg von 15
- Tk_{Käfig}: Teilkreis von 5
- Tk_{Lager}: Teilkreis von 1
- h: Höhe von 18, 19
- d_{w}: Durchmesser von 4
- b_{w}: Breite von 4

## Patentansprüche

1. Radialwälzlager, insbesondere einreihiges Rillenwälzlager, welches im Wesentlichen aus einem äußeren Lagerring (2) und einem inneren Lagerring (3) sowie aus einer Vielzahl zwischen diesen Lagerringen (2, 3) angeordneter und als Kugelscheiben ausgebildeter Wälzkörper (4) besteht, die jeweils zwei symmetrisch von einer Kugelgrundform abgeflachte, parallel zueinander angeordnete Seitenflächen (8, 9) aufweisen und mit ihren Laufflächen (10) in zwei rillenförmigen Laufbahnen (11, 12) abrollen, welche in die Innenseite (13) des äußeren Lagerrings (2) und in die Außenseite (14) des inneren Lagerrings (3) eingearbeitet sind, wobei die Wälzkörper (4) in Umfangsrichtung durch einen aus zwei Ringhälften (6, 7) zusammengefügten Lagerkäfig (5) in gleichmäßigen Abständen zueinander gehalten werden, der für jeden Wälzkörper (4) einzelne, dieselben an einer Teilkreislinie umschließende Käfigtaschen (15) aufweist, in denen die Wälzkörper (4) einerseits zwischen den Lagerringen (2, 3) axial geführt werden und andererseits mit einem definierten Freiheitsgrad zum selbsttätigen Ausrichten an den Druckwinkel des Radialwälzlagers, (1) ausgebildet sind, **dadurch gekennzeichnet, dass** in die Seitenflächen (8, 9) der Wälzkörper (4) bevorzugt zentriche Vertiefungen (18, 19) eingearbeitet sind und dass die axiale Führung der Wälzkörper (4) durch längsmittig in die Längsstege (16, 17) der Käfigtaschen (15) eingeformte und sich über die Breite der Seitenflächen (8, 9) der Wälzkörper (4) erstreckende axiale Keilvertiefungen (22, 23) erfolgt, über die zumindest zwei reibungsarme Linienkontakte zwischen den Seitenflächen (8, 9) der Wälzkörper (4) und den Längsstegen (16, 17) der Käfigtaschen (15) herstellbar sind, wobei der Teilkreis (Tk_{Käfig}) des Lagerkäfigs (5) kleiner als der Teilkreis (Tk_{Lager}) des Radialwälzlagers (1) ist und die Längsstege (16, 17) der Käfigtaschen (15) eine maximale Höhe (h) von 35 % des Durchmessers (d_{w}) der Wälzkörper (4) aufweisen.

2. Radialwälzlager nach Anspruch 1, **dadurch gekennzeichnet, dass** die entsprechend den Radien der Laufflächen (10) der Wälzkörper (4) gewölbt ausgebildeten Querstege (24, 25) der Käfigtaschen (15) sich beidseitig derart über diese Laufflächen (10) hinaus erstrecken, dass die zwischen den Querstegen (24, 25) über verrundete Übergangsbereiche mit diesen verbundenen Längsstege (16, 17) der Käfigtaschen (15) in einem Abstand zu den Seitenflächen (8, 9) der Wälzkörper (4) angeordnet sind.

3. Radialwälzlager nach Anspruch 2, **dadurch gekennzeichnet, dass** die Wälzkörper (4) durch die von deren Seitenflächen (8, 9) beabstandete Anordnung der Längsstege (16, 17) der Käfigtaschen (15) beidseitig einen durch die Ober- und Unterseite der Keilvertiefungen (22, 23) in den Längsstegen (16, 17) begrenzten axialen Freiheitsgrad von etwa 12° bis 18° zum selbsttätigen Ausrichten an den Druckwinkel des Radiallagers (1) bei radialer und axialer Lagerbelastung aufweisen.

4. Radialwälzlager nach Anspruch 1, **dadurch gekennzeichnet, dass** der Lagerkäfig (5) als spanlos herstellbares Stanzzieh-Prägeteil aus einem Metallwerkstoff, beispielsweise Stahl, Messing oder Aluminium, ausgebildet ist, welcher vollständig oder begrenzt auf dessen Kontaktstellen mit den Wälzkörpern (4) mit Funktionsschichten aus Hartstoff, Chrom-Eisen, Oxid-Keramiken oder Molybdän beschichtet oder mit einem technischen Kunststoff umspritzt ist.

5. Radialwälzlager nach Anspruch 1, **dadurch gekennzeichnet, dass** der Lagerkäfig (5) als Spritzgussteil aus einem technischen Kunststoff, wie PA 66 oder PA 46 mit oder ohne Einlagerungen aus Glasfaser, oder aus einem hochtemperaturbeständigen Kunststoff, beispielsweise aus PAEK, PEEK, TPI oder PAI mit geeigneten Additiven oder Einlagerungen aus Glasfaser, oder aus einem Faserverbundkunststoff aus Gewebeverstärkung und Harzmatrix besteht.

## Claims

1. Radial rolling bearing, in particular single-row deep groove rolling bearing, which is composed substantially of an outer bearing ring (2) and an inner bearing ring (3) and of a plurality of rolling bodies (4) which are formed as spherical washers and arranged between said bearing rings (2, 3), which rolling bodies (4) have in each case two side surfaces (8, 9), which are flattened symmetrically from a spherical basic shape and are arranged parallel to one another, and roll with their running surfaces (10) in two groove-shaped raceways (11, 12) which are formed into the inner side (13) of the outer bearing ring (2) and into the outer side (14) of the inner bearing ring (3), with the rolling bearings (4) being held at uniform intervals with respect to one another in the tangential direction by means of a bearing cage (5) which is composed of two ring halves (6, 7), which bearing cage (5) has individual cage pockets (15) for each rolling body (4), which cage pockets (15) surround said rolling bodies (4) on a pitch circle line and in which cage pockets (15) the rolling bodies (4) are firstly axially guided between the bearing rings (2, 3) and are secondly formed with a defined degree of freedom for self-alignment to the pressure angle of the radial rolling bearing (1), **characterized in that** preferably central depressions (18, 19) are formed into the side surfaces (8, 9) of the rolling bodies (4), and **in that** the axial guidance of the rolling bodies (4) occurs by means of axial wedge-shaped depressions (22, 23) which are formed longitudinally centrally into the longitudinal webs (16, 17) of the cage pockets (15) and which extend over the width of the side surfaces (8, 9) of the rolling bodies (4) and by means of which at least two low-friction lines of contact can be produced between the side surfaces (8, 9) of the rolling bodies (4) and the longitudinal webs (16, 17) of the cage pockets (15), with the pitch circle (TK_{cage}) of the bearing cage (5) being smaller than the pitch circle (TK_{bearing}) of the radial rolling bearing (1), and the longitudinal webs (16, 17) of the cage pockets (15) having a maximum height (h) of 35% of the diameter (d_{w}) of the rolling bodies (4).

2. Radial rolling bearing according to Claim 1, **characterized in that** the transverse webs (24, 25), which are formed so as to be domed corresponding to the radii of the running surfaces (10) of the rolling bodies (4), of the cage pockets (15) extend at both sides beyond said running surfaces (10) in such a way that the longitudinal webs (16, 17), which are connected to said transverse webs (24, 25) by means of rounded transition regions, of the cage pockets (15) are arranged with a spacing to the side surfaces (8, 9) of the rolling bodies (4) with the pitch circle (Tk_{cage}) of the bearing cage (5) being smaller than the pitch circle (Tk_{bearing}) of the radial rolling bearing (1), and the longitudinal webs (16, 17) of the cage pockets (15) having a maximum height (h) of 35% of the diameter (d_{w}) of the rolling bodies (4).

3. Radial rolling bearing according to Claim 2, **characterized in that** the rolling bodies (4), as a result of the arrangement of the longitudinal webs (16, 17) of the cage pockets (15) spaced apart from their side surfaces (8, 9), have, at both sides, an axial degree of freedom, which is delimited by the upper and lower sides of the wedge-shaped depressions (22, 23) in the longitudinal webs (16, 17), of approximately 12° to 18° for self-alignment to the pressure angle of the radial bearing (1) under radial and axial bearing loading.

4. Radial rolling bearing according to Claim 1, **characterized in that** the bearing cage (5) is formed as a punched, drawn, embossed part, which can be produced without cutting, composed of a metal material, for example steel, brass or aluminum, which is coated entirely, or only at its contact points with the rolling bodies (4), with functional coatings composed of hard material, chromite, oxide ceramics or molybdenum, or is encapsulated with an engineering plastic.

5. Radial rolling bearing according to Claim 1, **characterized in that** the bearing cage (5) is composed of an engineering plastic such as PA 66 or PA 46 with or without inclusions of glass fibers, or of a high-temperature-resistant plastic, for example PAEK, PEEK, TPI or PAI with suitable additives or inclusions of glass fibers, or of a fiber-composite plastic composed of fabric reinforcement and resin matrix.

## Revendications

1. Palier à roulement radial, notamment palier à roulement radial à une rangée, qui se compose essentiellement d'une bague de palier externe (2) et d'une bague de palier interne (3) ainsi que d'une pluralité de corps de roulement (4) disposés entre ces bagues de palier (2, 3) et réalisés sous forme de rondelles sphériques, lesquels présentent à chaque fois deux faces latérales (8, 9) disposées parallèlement l'une à l'autre et aplaties symétriquement à partir d'une forme de base sphérique, et qui roulent avec leurs surfaces de roulement (10) dans deux pistes de roulement en forme de gorges (11, 12), qui sont pratiquées dans le côté interne (13) de la bague de palier externe (2) et dans le côté externe (14) de la bague de palier interne (3), les corps de roulement (4) étant maintenus de manière équidistante les uns des autres dans la direction périphérique par une cage de palier (5) assemblée à partir de deux moitiés de bagues (6, 7), la cage de palier présentant pour chaque corps de roulement (4) des cavités de cage (15) individuelles, entourant ces derniers sur une ligne d'un cercle partiel, dans lesquelles cavités les corps de roulement (4) sont d'une part guidés axialement entre les bagues de palier (2, 3) et sont réalisés d'autre part avec un degré de liberté défini de manière à s'orienter automatiquement suivant l'angle de pression du palier à roulement radial (1), **caractérisé en ce que** des renfoncements de préférence centraux (18, 19) sont pratiqués dans les surfaces latérales (8, 9) des corps de roulement (4) et **en ce que** le guidage axial des corps de roulement (4) s'effectue par des renfoncements axiaux en forme de coin (22, 23) s'étendant sur la largeur des surfaces latérales (8, 9) des corps de roulement (4) et formés au milieu dans la longueur des nervures longitudinales (16, 17) des cavités de la cage (15), par le biais desquels renfoncements au moins deux contacts linéaires à faible friction peuvent être créés entre les surfaces latérales (8, 9) des corps de roulement (4) et les nervures longitudinales (16, 17) des cavités de la cage (15), le cercle partiel (Tk_{Käfig}) de la cage de palier (5) étant inférieur au cercle partiel (Tk_{Lager}) du palier à roulement radial (1) et les nervures longitudinales (16, 17) des cavités de la cage (15) présentant une hauteur maximale (h) de 35% du diamètre (d_{w}) des corps de roulement (4).

2. Palier à roulement radial selon la revendication 1, **caractérisé en ce que** les nervures transversales (24, 25) des cavités de la cage (15) réalisées avec une courbure correspondant aux rayons des surfaces de roulement (10) des corps de roulement (4) s'étendent de chaque côté au-delà de ces surfaces de roulement (10) de telle sorte que les nervures longitudinales (16, 17) des cavités de la cage (15) connectées entre les nervures transversales (24, 25) à ces dernières par le biais de régions de transition arrondies soient disposées à distance des faces latérales (8, 9) des corps de roulement (4).

3. Palier à roulement radial selon la revendication 2, **caractérisé en ce que** les corps de roulement (4), du fait de l'agencement espacé par rapport à leurs surfaces latérales (8, 9) des nervures longitudinales (16, 17) des cavités de la cage (15), présentent de chaque côté un degré de liberté axial d'environ 12° à 18° limité par le côté supérieur et le côté inférieur des renfoncements en forme de coin (22, 23) dans les nervures longitudinales (16, 17), de manière à s'orienter automatiquement suivant l'angle de pression du palier à roulement radial (1) lors de sollicitations radiale et axiale du palier.

4. Palier à roulement radial selon la revendication 1, **caractérisé en ce que** la cage de palier (5) est réalisée sous forme de pièce gaufrée emboutie estampée en un matériau métallique, par exemple en acier, en laiton ou en aluminium, qui est complètement revêtue, ou de manière limitée, au niveau de ses points de contact avec les corps de roulement (4), de couches fonctionnelles en matière dure, en fer chromé, en oxydes céramiques ou en molybdène ou est surmoulée avec un plastique technique.

5. Palier à roulement radial selon la revendication 1, **caractérisé en ce que** la cage de palier (5) en tant que pièce moulée par injection se compose d'un plastique technique, comme du PA 66 ou PA 46, avec ou sans incorporation de couches de fibres de verre, ou d'un plastique résistant aux hautes températures, par exemple en PAEK, PEEK, TPI ou PAI, avec des additifs appropriés ou des incorporations de couches de fibres de verre, ou d'un plastique composite renforcé par des fibres avec tissu de renforcement et matrice de résine.
